# EUROPEAN PATENT SPECIFICATION

(11) **EP 2 030 366 B1**
(45) Date of publication and mention of the grant of the patent: **20.04.2011**
(21) Application number: 07795279.4
(22) Date of filing: 23.05.2007
(51) Int. Cl.: H04L 12/14, H04M 15/00, H04L 29/06

(54) **PROVIDING NOTIFICATION IN IMS NETWORKS**
BEREITSTELLUNG VON NACHRICHTEN IN IMS-NETZEN
NOTIFICATION DANS DES RÉSEAUX IMS

(30) Priority: 23.05.2006 CN 200610084852; 27.11.2006 US 563470
(43) Date of publication of application: 04.03.2009
(73) Proprietor: LUCENT TECHNOLOGIES INC., Murray Hill, NJ 07974-0636 (US)
(72) Inventor: CAI, Yigang, Naperville, IL 60564 (US); LI, Xiang Yang, Beijing 100-094 (CN); PEI, Ke, Beijing 102-208 (CN); SU, Jie, Beijing 100-012 (CN); ZHAO, Jay Z., Beijing 100-103 (CN)
(74) Representative: Nicolle, Olivier
(86) International application number: PCT/US2007/012377
(87) International publication number: WO 2007/139877

(56) References cited:
- CAI Y ET AL: "IP MULTIMEDIA SUBSYSTEM ONLINE SESSION CHARGING CALL CONTROL" BELL LABS TECHNICAL JOURNAL, vol. 4, no. 10, 7 March 2006 (2006-03-07), pages 117-132, XP001239291 ISSN: 1089-7089
- "Universal Mobile Telecommunications System (UMTS); Telecommunication management; Charging management; IP Multimedia Subsystem (IMS) charging (3GPP TS 32.260 version 6.5.0 Release 6)" ETSI TS 132 260 V6.5.0, March 2006 (2006-03), XP014033929 cited in the application
- "3rd Generation Partnership Project; Technical Specification Group Services and System Aspects; Telecommunication management; Charging management; Charging architecture and principles (Release 6)" 3GPP TS 32.240 V6.0.0, September 2004 (2004-09), XP014022018 cited in the application

## Description

### Background of the Invention

### 1. Field of the Invention

The invention is related to the field of communications, and in particular, to providing notification (or announcements) to IMS subscribers of an IMS network.

### 2. Statement of the Problem

Traditional wireless and wireline networks have the capabilities of providing notification to a caller in a variety of circumstances. One common circumstance is for wireline prepaid calls (calling card calls) and wireless prepaid calls. For instance, a wireless subscriber may sign up for prepaid service where a particular amount of minutes are purchased in advance. When the subscriber places a call with a wireless device, the call is received by a Mobile Switching Center (MSC) in the wireless network. The MSC recognizes the subscriber is a prepaid subscriber and queries a Service Control Point (SCP) for call routing information. The SCP then determines how to handle the prepaid call.

As part of call handling, the SCP may control an intelligent peripheral to provide pre-call notification to the subscriber. The pre-call notification may be a greeting along with a message indicating the status of the subscriber's account balance before the call. If the call is subsequently completed to the called party, then the SCP may further control the intelligent peripheral to provide mid-call notification. The mid-call notification may be a warning that the account balance is running low and a request that the subscriber replenish or recharge his/her account balance. If the call is subsequently terminated, then the SCP may further control the intelligent peripheral to provide post-call notification. The post-call notification may be a message indicating the status of the subscriber's account balance after the call.

Another type of network graining popularity is an IP Multimedia Subsystem (IMS) network. As set forth in the 3^{rd} Generation Partnership Project (3GPP), IMS provides a common core network having access-agnostic network architecture for converged networks. Service providers are accepting this architecture in next generation network evolution. The IMS architecture is initially defined by the 3GPP to provide multimedia services to mobile subscribers over an Internet Protocol (IP) network. IP networks have become the most cost savings bearer network to transmit video, voice, and data. IMS uses the advantage of IP networks to provide multimedia services for IMS subscribers on an IMS platform. The signaling used within IMS networks is Session Initiation Protocol (SIP). IMS defines the standard SIP interface between application servers, the IMS core network (CSCF), the IMS subscriber, the IMS database (HSS), and IMS billing elements. These standards can reduce the network integration costs and let the subscriber enjoy more stable services.

On the IMS platform, the traditional supplementary services, such as call forwarding, conferencing, and call waiting are available for IMS subscribers. Also, many new data services, such as instant messaging, video calls, video on wait, and web-based services, will also be available for the IMS subscribers. IMS subscribers may be prepaid that is controlled by online charging mechanisms in the IMS network, or may be postpaid that is controlled by offline charging mechanisms in the IMS network. One present problem with IMS networks is that the 3GPP standards do not define how to provide notification to IMS subscribers as is done in traditional wireless and wireline networks.

Notification is commonly, but not exclusively, used for prepaid calls, which are more accurately referred to as prepaid sessions in IMS networks. Online charging mechanisms are used in IMS networks to handle the prepaid sessions, and the following describes an online charging architecture for IMS networks.

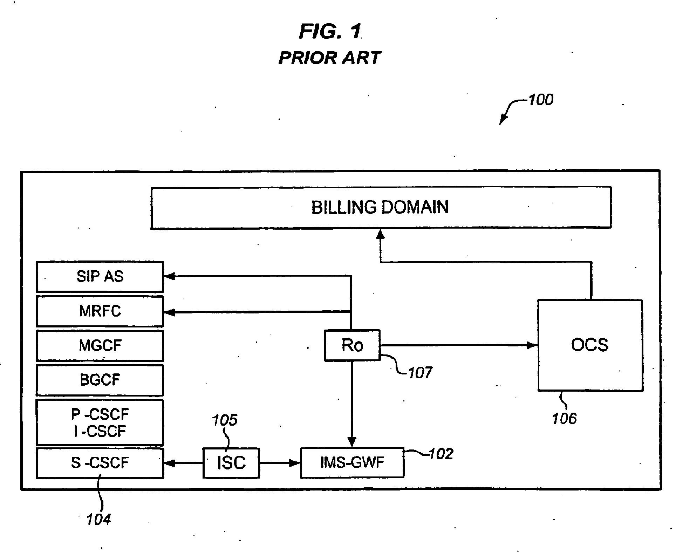

FIG. 1 illustrates an IMS online charging architecture 100 as suggested by the 3GPP in the prior art. Online charging architecture 100 is described in the 3GPP TS 32.240 specification and the 3GPP TS 32.260 specification that are available at www.3gpp.org. Online charging architecture 100 includes IMS gateway function 102, an S-CSCF 104, and an OCS 106. OCS 106 includes a session-based charging function (SBCF) and an event-based charging function (EBCF). The session-based charging function is responsible for online charging of network/subscriber sessions, such as voice calls or IMS sessions. The event-based charging function performs event-based online charging (also referred to as "context charging") in conjunction with any application servers.

S-CSCF 104 serves user equipment (UE) of an IMS subscriber and communicates with the UE through SIP. IMS gateway function 102 communicates with S-CSCF 104 over the ISC interface 105 and communicates with OCS 106 over the Ro interface 107. For online charging communication between S-CSCF 104 and the session-based charging function in OCS 106, S-CSCF 104 does not trigger online charging events and thus does not include a Charging Trigger Function (CTF). Instead, the ISC interface 105 is employed by the S-CSCF 104, implying that online charging is transparent to S-CSCF 104 and appears like any other service controlled by a SIP application server. Therefore, if support for Ro-based online charging is required, a special CTF is needed in order to mediate between the Ro-based session-based charging function and the SIP-based service control. This role is taken by IMS gateway function 102, which translates between SIP session control towards S-CSCF 104 and the Ro credit control towards OCS 106.

The 3GPP specifications are vague as to the role of the IMS gateway function 102. For instance, the 3GPP specifications do not describe how to use the IMS gateway function 102 for online charging. The specifications also do not resolve how the ISC interface, the Ro interface, and the S-CSCF 102 would function together, and how the IMS gateway function 102 would operate to provide budget control for online charging. The specifications also do not mention that the IMS gateway function 102 may provide notification to the UE for online charging functions or for any other triggering events that may happen before, during, or after an IMS session.

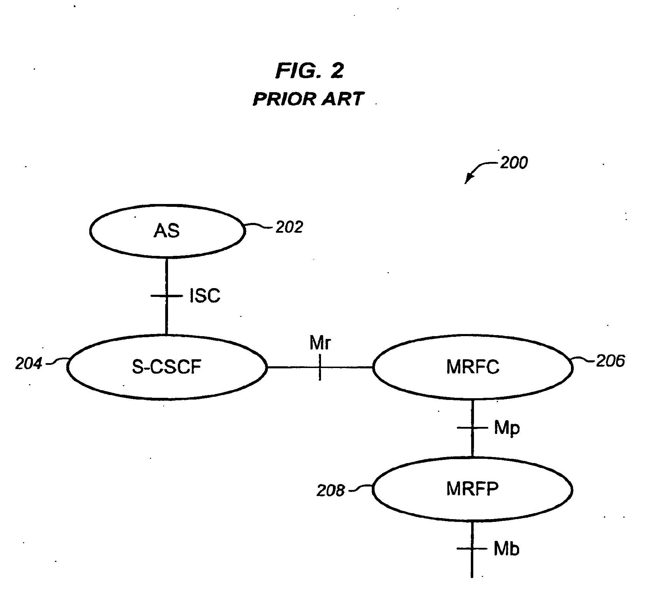

The 3GPP specifications do mention that a Media Resource Function (MRF) may be used to provide announcements to UE. FIG. 2 illustrates an MRF architecture 200 as suggested by the 3GPP in the prior art. MRF architecture 200 is described in the 3GPP TS 23.228 specification also available at www.3gpp.org. The MRF architecture 200 is further described in an article entitled "IP Multimedia Subsystem Online Session Charging Call Control" that was published in the Bell Labs Technical Journal 10(4) (2006). MRF architecture 200 illustrates an application server (AS) 202, an S-CSCF 204, a Media Resource Function Controller (MRFC) 206, and a Media Resource Function Processor (MRFP) 208. AS 202 communicates with S-CSCF 204 over an ISC interface. S-CSCF 204 communicates with the MRFC 206 over an Mr reference point. MRFC 206 communicates with the MRFP 208 over the Mp reference point. MRFP 208 communicates with other IP networks (not shown) over the Mb reference point.

MRFC 206 controls the media stream resources in the MRFP 208 and controls and interprets information coming from AS 202 or S-CSCF 204. MRFP 208 controls the bearer channel on the Mb reference point, provides resources to be controlled by the MRFC 206, and mixes the incoming media streams (e.g., for multiple parties) and media stream source (for multimedia announcements).

Unfortunately, the 3GPP specifications do not define how the MFR architecture 200 works with an IMS gateway system 102 to provide announcements to UE's, such as for online charging purposes. The 3GPP specifications mention that the MPFC 206 may be used for announcements, but do not describe how to operate the MPFC 206 in conjunction with an IMS gateway system 102 to provide notification. Also, the 3GPP specifications imply that the AS 202 and the S-CSCF 204 have the capability of providing announcements, but do not define the message flow over the Mr and Mp reference points to provide announcements.

### Summary of the Solution

The invention solves the above and other related problems with systems and methods for providing for notification to IMS subscribers using an IMS gateway system. The IMS gateway system described herein allows for pre-session, mid-session, and post-session notification, such as providing online charging notifications to the IMS subscriber. IMS subscribers may thus be able to experience similar notifications and announcements from IMS networks much like they experience in traditional wireline and wireless networks.

One embodiment of the invention comprises an IMS gateway system of an IMS network that handles notification. The IMS gateway system includes a session manager and a notification database. The notification database is adapted to store a plurality of notification definitions for pre-session, mid-session, and/or post-session notifications. The notifications definitions may be defined by a service provider or another party to define when and what notifications are provided to IMS subscribers, such as online charging notifications provided to an IMS subscriber. The session manager is adapted to identify a triggering event for a session of an IMS subscriber. A triggering event may be the initialization of a session, the account balance of the IMS subscriber running low, the termination of a session, or any other event as defined for the session manager. The session manager is further adapted to identify one or more notification definitions for the triggering event from the notification database. The session manager is further adapted to provide notification to the IMS subscriber based on the notification definition identified for the triggering event. The notification specified by the notification definition may a pre-session greeting, a mid-session warning of a low balance, a mid-session request to recharge the subscriber's account, a post-session goodbye message, or a multitude of other pre-session, mid-session, or post-session notifications.

In some embodiments, the session manager may provide the notification to the IMS subscriber through a text message. In other embodiments, the session manager may transmit the notification to a Media Resource Function Controller (MRFC)/Media Resource Function Processor (MRFP). The MRFC/MRFP then sets up a notification session with the IMS subscriber to provide the notification to the IMS subscriber through a multimedia message.

In another embodiment, if the notification definition for the triggering event requires online charging information, then the session manager identifies the required online charging information. The session manager may internally store the online charging information that it is presently using for budget control for the session. The session manager may also access an online charging system (OCS) to obtain the online charging information. When the online charging information is identified either internally or by accessing the OCS, then the session manager includes the online charging information in the notification to the IMS subscriber.

Another embodiment of the invention comprises an associated method of operating an IMS gateway system. The invention may include other exemplary embodiments described below.

### Description of the Drawings

FIG. 1 illustrates the 3GPP online charging architecture including the IMS gateway function in the prior art.
FIG. 2 illustrates the 3GPP Media Resource Function (MRF) architecture in the prior art.
FIG. 3 illustrates an IMS gateway system in an exemplary embodiment of the invention.
FIG. 4 is a flow chart illustrating a method of operating an IMS gateway system in an exemplary embodiment of the invention.
FIG. 5 is a message diagram illustrating pre-session notification in an exemplary embodiment of the invention.
FIG. 6 is a message diagram illustrating mid-session notification in an exemplary embodiment of the invention.

### Detailed Description of the Invention

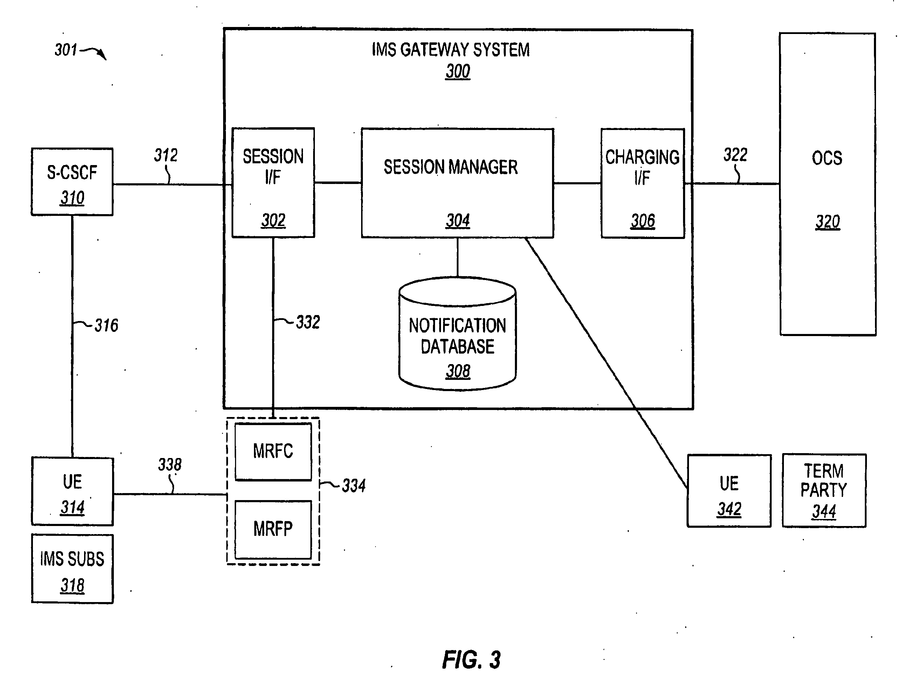

FIGS. 3-6 and the following description depict specific exemplary embodiments of the invention to teach those skilled in the art how to make and use the invention. For the purpose of teaching inventive principles, some conventional aspects of the invention have been simplified or omitted. Those skilled in the art will appreciate variations from these embodiments that fall within the scope of the invention. Those skilled in the art will appreciate that the features described below can be combined in various ways to form multiple variations of the invention. As a result, the invention is not limited to the specific embodiments described below, but only by the claims and their equivalents.

FIG. 3 illustrates an IMS gateway system 300 of an IMS network 301 in an exemplary embodiment of the invention. IMS gateway system 300 may be included in the IMS charging architecture 100 of FIG. 1 in a similar manner to IMS gateway function 102, but IMS gateway system 300 may also be implemented in other IMS charging architectures. IMS gateway system 300 includes a session interface 302, a session manager 304, a charging interface 306, and a notification database 308. Charging interface 306 is couplet to an online charging system (OCS) 320 over a link 322. Session interface 302 is coupled to a serving-call session control function (S-CSCF) 310 over a link 312. S-CSCF 310 is coupled to user equipment (UE) 314 over a link 316, where user equipment (UE) 314 is being operated by an IMS subscriber 318. Session interface 302 is also coupled to an MRFC/MRFP 334 over a link 332. MRFC/MRFP 334 is adapted to set up a link 338 with UE 314. Links 312, 316, 332, 336, and 338 may be wireline or wireless. IMS gateway system 300 is also illustrated as being coupled to UE 342 of a terminating party 344. IMS gateway system 300 may be coupled to UE 342 through S-CSCF 310 or another system or server that is known to those skilled in the art. IMS gateway system 300 may include other components, devices, or systems not shown in FIG. 3 for the sake of brevity.

Session manager 304 comprises any system, device, or server adapted to identify when notifications are needed, and to provide the notifications to IMS subscriber 318. Notifications comprise any text or multimedia announcements provided to IMS subscriber 318 through UE 314 or another device being operated by IMS subscriber 318. Session manager 304 may be implemented as software, hardware, or a combination of hardware and software. In a software implementation, session manager 304 may be comprised of instructions that are stored on storage media. The instructions may be retrieved and executed by a processing system. Some examples of instructions are software, program code, and firmware. Some examples of storage media are memory devices, tape, disks, integrated circuits, and servers. The instructions are operational when executed by the processing system to direct the processing system to operate in accordance with the invention. The term "processing system" refers to a single processing device or a group of inter-operational processing devices. Some examples of processors are computers, integrated circuits, and logic circuitry. Those skilled in the art are familiar with instructions, processors, and storage media.

Notification database 308 comprises any database, server, or system adapted to store a plurality of notification definitions for sessions in an IMS network. A notification definition comprises any information, data, criteria, etc, that define how to handle notifications to be provided in IMS network 301. The notification definitions may be defined by a service provider operating IMS network 301 or another party.

Session interface 302 comprises any interface adapted to exchange session control messages with S-CSCF 310 or another system or application. Session control messages comprise any messages used for session start-up, session management or maintenance, or session tear-down. Session interface 302 also comprises any interface adapted to communicate with MRFC/MRFP 334. Session interface 302 may comprise a SIP adaptor, an IMS service control (ISC) interface, and/or another interface.

Charging interface 306 comprises any interface adapted to exchange charging messages with OCS 320. Charging messages comprise any messages used for online charging of sessions in IMS network 301. Charging interface 306 may comprise a Diameter. Ro interface as suggested by the 3GPP, but may comprise another interface in other embodiments.

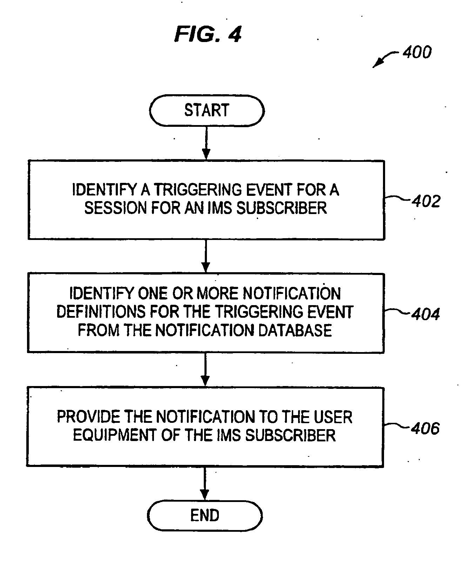

FIG. 4 is a flow chart illustrating a method 400 of operating IMS gateway system 300 in an exemplary embodiment of the invention. Method 400 describes some basic steps of operating IMS gateway system 300, but other steps may also be performed as needed or desired.

In step 402, session manager 304 identifies a triggering event for a session for IMS subscriber 318. A triggering event comprises any event where notification to IMS subscriber 318 may be needed or desired. The triggering events for notification may be defined in notification database 308, in session manager 304, or in another system. A triggering event for a session may be a pre-session triggering event, a mid-session triggering event, or a post-session triggering event. As an example of a pre-session triggering event, session manager 304 (through session interface 302) may receive a session start up message from UE 314 through S-CSCF 310, such as a SIP INVITE message to initiate a session. Session manager 304 may identify the session start up message as a triggering event requiring notification, such as a greeting or a beginning account balance. As an example of a mid-session triggering event, session manager 304 may determine that a prepaid account balance for IMS subscriber 318 is running low or running out during a session. Session manager 304 may identify the low balance as a triggering event requiring notification, such as a low balance warning or a request to recharge the account. As an example of a post-session triggering event, session manager 304 (through session interface 302) may receive a session termination message from UE 314 through S-CSCF 310, such as a SIP INVITE message to terminate a presently pending session. Session manager 304 may identify the session termination message as a triggering event requiring notification, such as a goodbye message or an ending account balance.

In step 404, session manager 304 identifies at least one notification definition for the triggering event from notification database 308. When the triggering event has been identified, there may be one or more notification definitions specifying the notifications that are required for this triggering event. Session manager 304 may query notification database 308 with an event name, an event number, or some other identifier of the triggering event. Notification database 308 would then respond with the notification definition(s) for the present triggering event.

In step 406, session manager 304 then provides notification to UE 314 of IMS subscriber 318 based on the one or more notification definitions identified for the triggering event. The notification may be a pre-session notification, a mid-session notification, or a post-session notification depending on the triggering event. Session manager 304 may provide the notification to UE 314 in multiple ways. For instance, session manager 304 may provide the notification to UE 314 in a text message. To provide the text message, session manager 304 may transmit a SIP INFO message to UE 314 through S-CSCF 310 that includes the text message. Alternatively, session manager 304 may provide the notification to UE 314 in a multimedia message. To provide the multimedia message, session manager 304 may transmit the multimedia message to MRFC/MRFP 334, such as through a SIP INVITE message. Responsive to receiving the multimedia message, MRFC/MRFP 334 would set up link 338 with UE 314 and transmit or play the multimedia message to UE 314 over link 338, such as through Real-time Transport Protocol (RTP).

In providing one or more of the notifications to IMS subscriber 318, session manager 304 may need online charging information for the notification (as specified in the notification definition for the triggering event). If session manager 304 is providing budget control for the session, then session manager 304 may internally store online charging information for the notification. For instance, for budget control the session manager 304 may request a quota for a session from OCS 320 through charging interface 306. To do so, session manager 304 transmits a Diameter Credit Control Request (CCR) message or similar message to OCS 320 for credit authorization. Responsive to the CCR message, OCS 320 grants quota units that are allocated based on the charge rating, which could be based on media type, bandwidth, encode mechanism, QoS, etc. OCS 320 then generates a Diameter Credit Control Answer (CCA) message or similar message that includes the granted quota, and transmits the CCA message to session manager 304. Session manager 304 then monitors the granted quota during the session and requests new quotas if needed. Session manager 304 may thus be able to identify online charging information internally if needed for a notification.

Session manager 304 may also query OCS 320 for the desired online charging information. For example, OCS 320 may query OCS 320 for a pre-session account balance of IMS subscriber 318. Session manager 304 transmits a CCR message or similar message to OCS 320 through charging interface 306 requesting the desired information. OCS 320 would respond with a CCA message or similar message that includes the desired online charging information. Session manager 304 may then be able to include the online charging information in the notification.

The notifications definitions may have different formats as desired. The following provides one exemplary format. A notification definition may include a "Notification Category" field that identifies a class of service, such as prepaid or postpaid. The notification definition may further include a "Notification Session Status" field that identifies the status of the session, such as pre-session, mid-session, or post-session. The notification definition may further include a "Notification Event" field that identifies the type of triggering event requiring notification, such as session initiation, a low balance during a session, session termination, etc. The notification definition may further include a "Notification Method" field that identifies the method used to provide the notification for a triggering event, such as a text message, a multimedia message, etc. The notification definition may further include a "Notification Information" field that includes or describes the content of the notification to be provided for the triggering event, such as a pre-session greeting, a pre-session account balance status (e.g., present balance, low balance warning, no balance warning, request to recharge the account balance, etc), a free charge notification, a mid-session credit expiry notification, a service blocked notification, a multiple simultaneous sessions exceeded notification, a new quota applied notification, a mid-session low balance notification, a mid-session price plan changed notification, a recharge required for low balance notification, a post-session balance exhausted notification, a goodbye or thank you notification, etc.

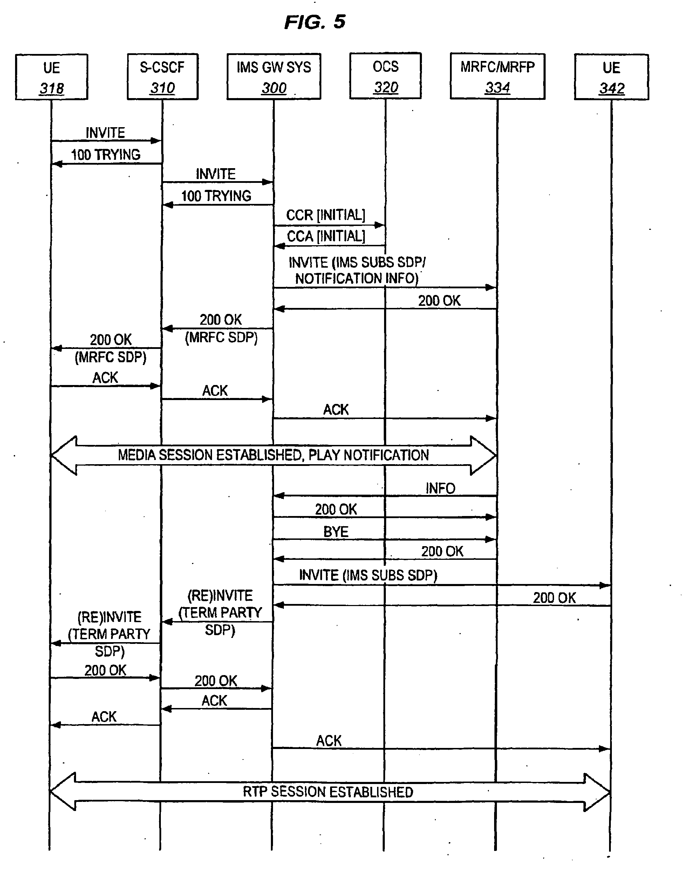

FIGS. 5-6 are message diagrams illustrating notification by IMS gateway system 300 in an exemplary embodiment of the invention. In this embodiment, session interface 302 comprises an ISC interface using SIP, and charging interface 306 comprises a Diameter Ro interface. These examples focus on notification functionality, and other messages may be used for an actual session.

FIG. 5 is a message diagram illustrating pre-session notification in an exemplary embodiment of the invention. To begin, assume that IMS subscriber 318 wants to initiate a session with terminating party 344. UE 314 transmits a SIP INVITE message to S-CSCF 310 to which S-CSCF 310 responds with a SIP 100 TRYING message. S-CSCF 310 also forwards the INVITE message to IMS gateway system 300, which IMS gateway system 300 responds with a 100 TRYING message. Session manager 304 is continually monitoring for triggering events that require notification. Assume for this embodiment that receiving an initial INVITE message from UE 314 comprises a triggering event. Session manager 304 then accesses notification database 308 to identify one or more notification definitions for this triggering event. Once identified, assume that the notification definition specifies that a notification is required that provides IMS subscriber 318 with the present pre-session account balance.

Session manager 304 generates a Diameter Credit Control Request (CCR) [INITIAL] message to transmit to OCS 320. The CCR[INITIAL] message may be for credit authorization for the session, but session manager 304 also requests that OCS 320 provide information required for pre-session notification via extended Ro. The information in this embodiment would be the present account balance of IMS subscriber 318. Session manager 304 then transmits the CCR[INITIAL] message to OCS 320.

OCS 320 grants quota units responsive to the CCR[INITIAL] message and generates a Diameter Credit Control Answer (CCA)[INITIAL] message. OCS 320 sets the granted quota to the relevant granted Quota AVP in the CCA[ITTITIAL] message, and also populates the extra information for pre-session notification in the CCA[INITIAL] message. OCS 320 then transmits the CCA[INITIAL] message to IMS gateway system 300.

Responsive to receiving the CCA[INITIAL] message, session manager 304 extracts the desired information from the CCA[INITIAL] message needed for the notification. Session manager 304 may also identify other content that may be included in the notification. Session manager 304 then transmits a SIP INVITE message with information for IMS subscriber 318 and the notification information to MRFC/NIRFP 334. MRFC/MRFP 334 responds with a SIP 200 OK message to IMS gateway system 300. IMS gateway system 300 transmits the 200 OK message to S-CSCF 310 that includes information on MRFC/MRFP 334. S-CSCF 310 forwards the 200 OK message to UE 314. UE 314 responds to the 200 OK message with a SIP ACK message to S-CSCF 310. S-CSCF 310 transmits the ACK message to IMS gateway system 300. IMS gateway system 300 transmits the ACK message to MRFC/MRFP 334. The media session between UE 314 and MFRP 334 is thus established. MRFC/MRFP 334 then plays the desired notification to UE 314 that includes the pre-session account balance.

After the notification is completed, MRFC/MRFP 334 transmits a SIP INFO message to IMS gateway system 300. IMS gateway system 300 responds with a SIP 200 OK message to MRFC/MRFP 334 and with a SIP BYE message to terminate the notification session between MRFC/MRFP 334 and UE 314. MRFC/MRFP 334 then transmits a SIP 200 OK message to IMS gateway system 300 and the notification session ends.

IMS gateway system 300 then transmits a SIP INVITE message to UE 342 of terminating party 344 to set up the session with terminating party 344. UE 342 responds with a SIP 200 OK message to IMS gateway system 300. IMS gateway system 300 then transmits a SIP (RE)INVITE message to UE 314 through S-CSCF 310. UE 314 responds with a 200 OK message to IMS gateway system 300 through S-CSCF 310. IMS gateway system 300 then responds with a SIP ACK message to UE 314 through S-CSCF 310. IMS gateway system 300 also transmits an ACK message to UE 342. The media session between IMS subscriber 318 and terminating party 344 is thus established.

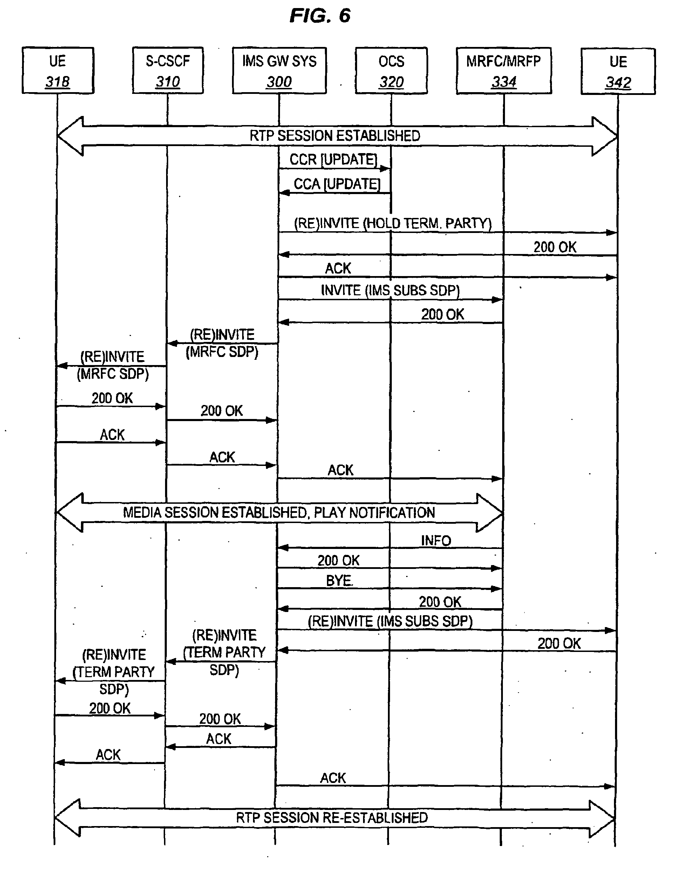

FIG. 6 is a message diagram illustrating mid-session notification in an exemplary embodiment of the invention. During the session, session manager 304 is monitoring the granted quota for the session. Assume that the granted quota presently allocated by OCS 320 has been used up. Also assume for this embodiment that a quota being used up comprises a triggering event. Session manager 304 then accesses notification database 308 to identify one or more notification definitions for this triggering event. Once identified, assume that the notification definition specifies that a notification is required if the account balance of IMS subscriber 318 is below a threshold amount.

To obtain a new quota from OCS 320, session manager 304 generates a CCR [UPDATE] message to transmit to OCS 320. The CCR [UPDATE] message is to obtain a new quota for the session, and also requests that OCS 320 provide information required for mid-session notification via extended Ro. The information in this embodiment would be the present account balance of IMS subscriber 318. session manager 304 then transmits the CCR[UPDATE] message to OCS 320.

OCS 320 grants quota units (if available) responsive to the CCR[UPDATE] message and generates a CCA[UPDATE] message. OCS 320 sets the granted quota to the relevant granted Quota AVP in the CCA[UPDATE] message, and also populates the extra information for mid-session notification in the CCA[UPDATE] message. OCS 320 then transmits the CCA[UPDATE] message to IMS gateway system 300.

Responsive to receiving the CCA[UPDATE] message, session manager 304 extracts the desired information from CCA[UPDATE] message needed for the notification. Session manager 304 may also identify other content that may be included in the notification. If the account balance of IMS subscriber 318 is below a threshold, then session manager 304 transmits a SIP (RE)INVITE message to UE 342 to hold the terminating party 344. UE 342 responds with a 200 OK message to IMS gateway system 300. IMS gateway system 300 transmits an ACK message to UE 342.

Session manager 304 then transmits a SIP INVITE message with information for IMS subscriber 318 and the notification information to MRFC/MRFP 334. MRFC/MRFP 334 responds with a SIP 200 OK message to IMS gateway system 300. IMS gateway system 300 transmits a SIP (RE)INVITE message to UE 314 through S-CSCF 310 that includes information on MRFC/MRFP 334. UE 314 responds with a 200 OK message to IMS gateway system 300 through S-CSCF 310. UE 314 also responds with a SIP ACK message to IMS gateway system 300 through S-CSCF 310. IMS gateway system 300 transmits the ACK message to MRFC/MRFP 334. The media session between UE 314 and MRFC/MRFP 334 is thus established. MRFC/MRFP 334 then plays the desired notification to UE 314 that includes a warning of a low balance.

After the notification is completed, MRFC/MRFP 334 transmits a SIP INFO message to IMS gateway system 300. IMS gateway system 300 responds with a SIP 200 OK message to MRFC/MRFP 334 and with a SIP BYE message to terminate the notification session between MRFC/MRFP 334 and UE 314. MRFC/MRFP 334 then transmits a SIP 200 OK message to IMS gateway system 300 and the notification session ends.

IMS gateway system 300 then transmits a SIP (RE)INVITE message with information for IMS subscriber 318 to UE 342 to resume the connection between IMS subscriber 318 and terminating party 344. UE 342 responds with a SIP 200 OK message to IMS gateway system 300. IMS gateway system 300 then transmits a SIP (RE)INVITE message to UE 314 through S-CSCF 310. UE 314 responds with a 200 OK message to IMS gateway system 300 through S-CSCF 310. IMS gateway system 300 then responds with a SIP ACK message to UE 314 through S-CSCF 310. IMS gateway system 300 also transmits an ACK message to UE 342. The media session between IMS subscriber 318 and terminating party 344 is thus reestablished.

As described in the above embodiments, IMS gateway system 300 advantageously provides for notification at different times during a session. IMS subscribers may thus be able to experience similar notifications and announcements from IMS networks much like they experience in traditional wireline and wireless networks.

Although specific embodiments were described herein, the scope of the invention is not limited to those specific embodiments.

## Claims

1. An IMS gateway system (300), **characterized by**:
a notification database (308) adapted to store a plurality of notification definitions that define notifications to be provided in an IMS network (301); and
a session manager (304) adapted to identify a triggering event for a session of an IMS subscriber (318), identify at least one notification definition for the triggering event from the notification database, and provide notification to the IMS subscriber based on the at least one notification definition identified for the triggering event.

2. The IMS gateway system (300) of claim 1 wherein if the notification definition for the triggering event requires online charging information, then the session manager (304) is further adapted to:
transmit a request to an online charging system, hereafter referred to as OCS, (320) for the online charging information;
receive a response from the OCS that includes the online charging information; and
provide the notification to the IMS subscriber (318) that includes the online charging information.

3. The IMS gateway system (300) of claim 1 wherein the session manager (304) is further adapted to:
provide the notification by transmitting a text message to the IMS subscriber (318) through an S-CSCF (310) serving the IMS subscriber.

4. The IMS gateway system (300) of claim 1 wherein the session manager (304) is further adapted to:
provide the notification by transmitting a multimedia message to a Media Resource Function Controller Media Resource Function Processor (334) adapted to transmit the multimedia message to the IMS subscriber (318).

5. The IMS gateway system (300) of claim 1 wherein the triggering event comprises one of a pre-session triggering event, a mid-session triggering event, or a post-session triggering event.

6. A method of operating an IMS gateway system, the method **characterized by** the steps of:
storing a plurality of notification definitions that define notifications to be provided in an IMS network;
identifying a triggering event for a session of an IMS subscriber (402),
identifying at least one notification definition for the triggering event (404), and
providing notification to the IMS subscriber based on the at least one notification definition identified for the triggering event (406).

7. The method of claim 6 wherein if the notification definition for the triggering event requires online charging information, then the method further comprises:
transmitting a request to an online charging system, hereafter referred to as OCS, for the online charging information;
receiving a response from the OCS that includes the online charging information; and
providing the notification to the IMS subscriber that includes the online charging information.

8. The method of claim 6 wherein providing the notification comprises:
providing the notification by transmitting a text message to the IMS subscriber through an S-CSCF serving the IMS subscriber.

9. The method of claim 6 wherein providing the notification comprises:
providing the notification by transmitting a multimedia message to a Media Resource Function Controller Media Resource Function Processor adapted to transmit the multimedia message to the IMS subscriber.

10. The method of claim 6 wherein the triggering event comprises one of a pre-session triggering event, a mid-session triggering event, or a post-session triggering event.

## Patentansprüche

1. IMS-Gateway-System (300), **gekennzeichnet durch**:
Eine Benachrichtigungsdatenbank (308), ausgelegt für die Speicherung einer Mehrzahl von Benachrichtigungsdefinitionen, welche in einem IMS-Netzwerk (301) bereitzustellende Benachrichtigungen definieren; und
einen Sitzungsverwalter (304), ausgelegt für die Identifizierung eines Trigger-Ereignisses für eine Sitzung eines IMS-Teilnehmers (318), für die Identifizierung mindestens einer Benachrichtigungsdefinition für das Trigger-Ereignis von der Benachrichtigungsdatenbank, und für die Bereitstellung einer Benachrichtigung an den IMS-Teilnehmer auf der Basis der mindestens einen für das Trigger-Ereignis identifizierten Benachrichtigungsdefinition.

2. Das IMS-Gateway-System (300) nach Anspruch 1, wobei, wenn die Benachrichtigungsdefinition für das Trigger-Ereignis eine Online-Vergebührungsinformation erfordert, der Sitzungsverwalter (304) weiterhin ausgelegt ist für:
Die Übertragung einer Anforderung an ein Online-Vergebührungssystem, nachstehend mit OCS (320) bezeichnet, für die Online-Vergebührungsinformation;
den Empfang einer Antwort von dem OCS, welche die Online-Vergebührungsinformation enthält; und
die Bereitstellung der Benachrichtigung, welche die Online-Vergebührungsinformation enthält, an den IMS-Teilnehmer (318).

3. Das IMS-Gateway-System (300) nach Anspruch 1, wobei der Sitzungsverwalter (304) weiterhin ausgelegt ist für:
Die Bereitstellung der Benachrichtigung durch Senden einer Textnachricht an den IMS-Teilnehmer (318) über eine S-CSCF (310), welche den IMS-Teilnehmer bedient.

4. Das IMS-Gateway-System (300) nach Anspruch 1, wobei der Sitzungsverwalter (304) weiterhin ausgelegt ist für:
Die Bereitstellung der Benachrichtigung durch Übertragen einer Multimedia-Nachricht an einen Medienressourcenfunktions-Controller/Medienressourcenfunktions-Prozessor (334), welcher dazu ausgelegt ist, die Multimedia-Nachricht an den IMS-Teilnehmer (318) zu übertragen.

5. Das IMS-Gateway-System (300) nach Anspruch 1, wobei das Trigger-Ereignis entweder ein Trigger-Ereignis vor der Sitzung, ein Trigger-Ereignis während der Sitzung oder ein Trigger-Ereignis nach der Sitzung umfasst.

6. Verfahren zum Betreiben eines IMS-Gateway-Systems, wobei das System durch die folgenden Schritte **gekennzeichnet** ist:
Speichern einer Mehrzahl von Benachrichtigungsdefinitionen, welche in einem IMS-Netzwerk bereitzustellende Benachrichtigungen definieren;
Identifizieren eines Trigger-Ereignisses für eine Sitzung eines IMS-Teilnehmers (402),
Identifizieren mindestens einer Benachrichtigungsdefinition für das Trigger-Ereignis (404), und
Bereitstellen der Benachrichtigung an den IMS-Teilnehmer auf der Basis der mindestens einen für das Trigger-Ereignis identifizierten Benachrichtigungsdefinition (406).

7. Das Verfahren nach Anspruch 6, wobei, wenn die Benachrichtigungsdefinition für das Trigger-Ereignis eine Online-Vergebührungsinformation erfordert, das Verfahren weiterhin umfasst:
Übertragen einer Anforderung an ein Online-Vergebührungssystem, nachstehend mit OCS bezeichnet, für die Online-Vergebührungsinformation;
Empfangen einer Antwort von dem OCS, welche die Online-Vergebührungsinformation enthält; und
Bereitstellen der Benachrichtigung, welche die Online-Vergebührungsinformation enthält, an den IMS-Teilnehmer.

8. Das Verfahren nach Anspruch 6, wobei das Bereitstellen der Benachrichtigung umfasst:
Bereitstellen der Benachrichtigung durch Übertragen einer Text-Nachricht an den IMS-Teilnehmer über eine S-CSCF, welche den IMS-Teilnehmer bedient.

9. Das Verfahren nach Anspruch 6, wobei das Bereitstellen der Benachrichtigung umfasst:
Bereitstellen der Benachrichtigung durch Übertragen einer Multimedia-Nachricht an einen Medienressourcenfunktions-Controller/Medienressourcenfunktions-Prozessor, welcher für die Übertragung der Multimedia-Nachricht an den IMS-Teilnehmer ausgelegt ist.

10. Das Verfahren nach Anspruch 6, wobei das Trigger-Ereignis entweder ein Trigger-Ereignis vor der Sitzung, ein Trigger-Ereignis während der Sitzung oder ein Trigger-Ereignis nach der Sitzung umfasst.

## Revendications

1. Système de passerelle IMS (300) **caractérisé par** :
une base de données de notification (308) adaptée pour stocker une pluralité de définitions de notification qui définissent des notifications à fournir dans un réseau IMS (301) ; et
un gestionnaire de session (304) adapté pour identifier un événement déclencheur pour une session d'un abonné IMS (318), identifier au moins une définition de notification pour l'événement déclencheur à partir de la base de données de notification et fournir la notification à l'abonné IMS en se basant sur l'au moins une définition de notification identifiée pour l'élément déclencheur.

2. Système de passerelle IMS (300) selon la revendication 1, dans lequel si la définition de notification pour l'événement déclencheur nécessite des informations de taxation en ligne, alors le gestionnaire de session (304) est en outre adapté pour :
émettre une demande à un système de taxation en ligne, désigné ci-après par OCS, (320) pour les informations de taxation en ligne ;
recevoir une réponse de la part de l'OCS qui inclut les informations de taxation en ligne ; et
fournir la notification à l'abonné IMS (318) qui inclut les informations de taxation en ligne.

3. Système de passerelle IMS (300) selon la revendication 1, dans lequel le gestionnaire de session (304) est en outre adapté pour :
fournir la notification en émettant un message texte à l'abonné IMS (318) par le biais d'un S-CSCF (310) qui dessert l'abonné IMS.

4. Système de passerelle IMS (300) selon la revendication 1, dans lequel le gestionnaire de session (304) est en outre adapté pour :
fournir la notification en émettant un message multimédia à un contrôleur de fonction de ressource de média / processeur de fonction de ressource de média (334) adapté pour émettre le message multimédia à l'abonné IMS (318).

5. Système de passerelle IMS (300) selon la revendication 1, dans lequel l'événement déclencheur comprend un événement déclencheur pré-session, un événement déclencheur de milieu de session ou un événement déclencheur post-session.

6. Procédé d'exploitation d'un système de passerelle IMS, le procédé étant **caractérisé par** les étapes suivantes :
stockage d'une pluralité de définitions de notification qui définissent les notifications à fournir dans un réseau IMS ;
identification d'un événement déclencheur pour une session d'un abonné IMS (402),
identification d'au moins une définition de notification pour l'événement déclencheur (404) et
fourniture de la notification à l'abonné IMS en se basant sur l'au moins une définition de notification identifiée pour l'événement déclencheur (406).

7. Procédé selon la revendication 6, dans lequel si la définition de notification pour l'événement déclencheur nécessite des informations de taxation en ligne, alors le procédé comprend en outre :
émission d'une demande à un système de taxation en ligne, désigné ci-après par OCS, pour les informations de taxation en ligne ;
réception d'une réponse de la part de l'OCS qui inclut les informations de taxation en ligne ; et
fourniture de la notification à l'abonné IMS qui inclut les informations de taxation en ligne.

8. Procédé selon la revendication 6, la fourniture de la notification comprenant :
fourniture de la notification en émettant un message texte à l'abonné IMS par le biais d'un S-CSCF qui dessert l'abonné IMS.

9. Procédé selon la revendication 6, la fourniture de la notification comprenant :
fourniture de la notification en émettant un message multimédia à un contrôleur de fonction de ressource de média / processeur de fonction de ressource de média adapté pour émettre le message multimédia à l'abonné IMS.

10. Procédé selon la revendication 6, dans lequel l'événement déclencheur comprend un événement déclencheur pré-session, un événement déclencheur de milieu de session ou un événement déclencheur post-session.
